# FASCICULE DE BREVET EUROPEEN

(11) **EP 0 751 349 B1**
(45) Date de publication et mention de la délivrance du brevet: **05.04.2000**
(21) Numéro de dépôt: 96401386.6
(22) Date de dépôt: 24.06.1996
(51) Int. Cl.: F23J 15/02, F23J 7/00, F23G 5/46

(54) **Procédé pour dépoussiérer à chaud des fumées de combustion, notamment pour une unité d'incinération d'ordures ménagères**
Verfahren zur Heissentstaubung von Abgasen, insbesondere für eine Müllverbrennungsvorrichtung
Process for hot dedusting flue gasses, particularly for a waste incineration unit

(30) Priorité: 30.06.1995 FR 9507923
(43) Date de publication de la demande: 02.01.1997
(73) Titulaire: ALSTOM Energy Systems S.A., 78140 Velizy-Villacoublay (FR)
(72) Inventeur: Morin, Jean-Xavier, 45170 Neuville aux Bois (FR)
(74) Mandataire: Gosse, Michel

(56) Documents cités:
- EP-A- 0 402 972
- EP-A- 0 611 590
- WO-A-87/01050
- DATABASE WPI Section Ch, Week 9516 Derwent Publications Ltd., London, GB; Class J01, AN 95-117954 XP002015304 & JP-A-07 039 713 ( HITACHI ZOSEN CORP) , 10 Février 1995

## Description

L'invention concerne le dépoussiérage de fumées de combustion. Elle s'applique notamment au dépoussiérage de fumées de combustion d'ordures ménagères.

Jusqu'à présent, les fumées de combustion d'ordures ménagères sont dépoussiérées à basse température (inférieure à 250°C) en aval de la chaudière de récupération de l'unité d'incinération d'ordures ménagères. Les fumées sont dépoussiérées par effet électrostatique ou à l'aide d'un filtre à manches en tissu.

Par ailleurs, les fumées de combustion d'ordures ménagères sont généralement traitées en aval de la chaudière de récupération par catalyse ou par injection de charbon actif pour réduire leur teneur en dioxines furanes (composés organiques à base de molécules cycliques et chlorées). Les émissions typiques en dioxines furanes dans les fumées de combustion d'ordures ménagères sont de l'ordre de 10ng/Nm³ à la sortie de la chaudière de récupération. Ces dioxines furanes se forment surtout à moyenne température (240°C/450°C) dans la chaudière de récupération, à partir de HCL, des particules d'imbrûlés contenues dans les cendres volantes des fumées et de l'effet catalytique de certains métaux de type oxyde de cuivre.

Le dépoussiérage à chaud des fumées de combustion a déjà été envisagé pour des systèmes de chauffe à combustion sous pression de charbon. Selon cette technique, les fumées de combustion sont dépoussiérées à haute température sur leur trajet de circulation par passage à travers un filtre, dit à haute température, par exemple du type comportant des chandelles en céramique.

L'utilisation d'un filtre à haute température permet d'alléger la structure du système de traitement des fumées en aval de la chaudière de récupération notamment parce que le dépoussiérage à chaud des fumées de combustion permet aussi de réduire la teneur en dioxines furanes de ces fumées en sortie de la chaudière de récupération si la filtration des cendres volantes est effectuée à une température suffisamment haute, de l'ordre de 450/650°C. Mais, les tentatives d'utilisation d'un tel procédé de dépoussiérage appliquées aux déchets butent sur le problème du décolmatage du gâteau de filtration. En effet, les fines particules de cendres volantes ont une température de fusion et une température de frittage relativement basses, ce qui fait qu'elles créent entre elles des ponts visqueux et colmatent les pores des chandelles en céramiques du filtre. Ce problème est exposé dans le document de brevet européen EP-A-0611590. Le gâteau de filtration qui se forme en surface des chandelles en céramique devient alors extrêmement difficile à enlever et nécessite des arrêts fréquents pour l'intervention de nettoyage voire le remplacement des chandelles. Ce problème de décolmatage est encore plus aigu si on considère le cas des fumées de combustion d'ordures ménagères du fait que les cendres volantes de ces fumées contiennent notamment de l'oxyde de sodium (Na₂O) qui contribue à abaisser encore plus la température de fusion des fines particules de cendres volantes et donc à amplifier le colmatage du filtre haute température. Il est par conséquent très difficile de concilier le dépoussiérage à chaud des fumées de combustion d'ordures ménagères avec un souci de réduction notable de leur teneur en dioxines furanes par le biais de ce dépoussiérage à chaud. Le document EP-A-0611590 décrit un procédé pour dépoussiérer des fumées de combustion par passage à travers un élément filtrant à haute température dans lequel on réduit les risques de combustion et d'explosion des cendres volantes dans l'élément filtrant en injectant en amont de celui-ci une poudre incombustible, comme l'alumine ou la magnésie, dans le flux de cendres volantes.

Ci-après, le terme température de fusion sera utilisé pour désigner la plage de température comportant également la température de frittage.

Un but de l'invention est de proposer un procédé pour dépoussiérer des fumées de combustion en les faisant circuler à travers un filtre à haute température placé à l'intérieur d'une chaudière de récupération avec lequel le décolmatage du gâteau de filtration est rendu possible.

Un autre but de l'invention est de proposer un procédé de dépoussiérage à chaud de fumées de combustion d'ordures ménagères susceptible d'amener la teneur en dioxines furanes des fumées de combustion à une valeur très faible, par exemple à 0,1ng/Nm³ de façon à satisfaire les conditions que la réglementation va bientôt imposer ou impose déjà dans certains pays.

A cet effet, l'invention a pour objet un procédé pour dépoussiérer des fumées de combustion par passage de ces fumées à travers un élément filtrant à haute température placé sur le trajet de circulation des fumées dans une chaudière de récupération pour filtrer à chaud les cendres volantes contenues dans ces fumées dans lequel on augmente la température de fusion des cendres volantes dans un but de décolmatage de l'élément filtrant en superposant au flux de cendres volantes un flux additionnel d'un matériau ayant des caractéristiques telles qu'il forme avec les cendres volantes des eutectiques à haute température de fusion.

La formation d'eutectiques à haute température de fusion permet d'utiliser le filtre à des températures correspondantes à celles nécessaires pour éviter la formation de dioxines furanes sans rencontrer les problèmes dus à la présence de ponts visqueux, de sorte qu'on obtient un gâteau de filtration peu compact et donc facile à décolmater.

En particulier, le décolmatage du gâteau de filtration peut être réalisé par une injection d'air ou de fumées sous haute pression à l'intérieur des chandelles en céramiques de l'élément filtrant.

Un exemple de réalisation de l'invention est décrit ci-après et illustré sur la figure unique qui est un schéma de principe d'une unité d'incinération d'ordures ménagères incluant un filtre à haute température pour le dépoussiérage à chaud des fumées de combustion.

Le procédé pour dépoussiérer à chaud les fumées de combustion selon l'invention s'applique de préférence à une unité d'incinération d'ordures ménagères à foyer à grille ou à lit fluidisé.

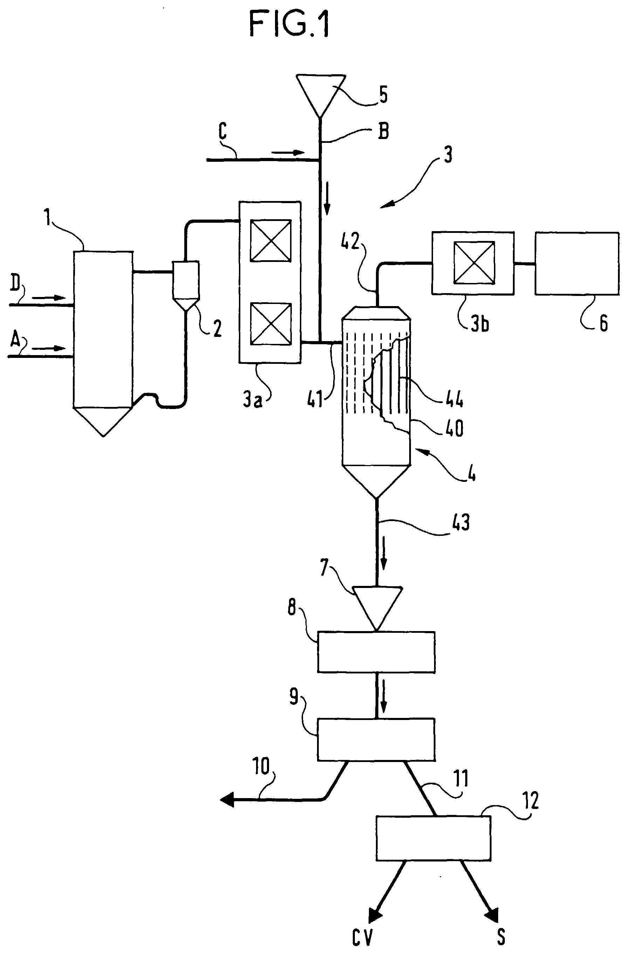

Figure 1, l'unité d'incinération d'ordures ménagères comprend un foyer de combustion 1 d'ordures ménagères introduites en A, ici un foyer à lit fluidisé circulant.

Les fumées de combustion sortant du foyer 1 sont envoyées dans un séparateur 2 de particules solides, du type cyclone, et les particules solides séparées sont réintroduites dans le bas du foyer 1.

Les fumées sortant du séparateur 2 à une température comprise généralement entre 850 et 900°C sont introduites dans une chaudière de récupération 3 où elles circulent le long de surfaces d'échange de chaleur qui abaissent leur température.

La chaudière de récupération 3 se présente ici en deux parties 3a et 3b à travers lesquelles circulent les fumées de combustion. Un élément filtrant 4, dit à haute température, est interposé entre les deux parties 3a,3b de la chaudière de récupération sur le trajet des fumées. Cet élément filtrant 4 sert à réaliser un dépoussiérage à chaud des fumées de combustion.

Dans le cadre d'une unité d'incinération d'ordures ménagères, le dépoussiérage à chaud présente de nombreux avantages tant pour la protection de l'environnement que pour la valorisation des déchets de combustion d'ordures ménagères.

En particulier, il permet de réduire très sensiblement la teneur en dioxines furanes des fumées de combustion en sortie de la chaudière de récupération si les précurseurs des dioxines sont piégés avec les cendres volantes par l'élément filtrant 4, à une température suffisamment haute, par exemple plus de 400°C, pour empêcher la formation des dioxines furanes. Il est à noter qu'ainsi, on obtient avec un élément filtrant, à la fois un dépoussiérage des fumées et une réduction de la teneur en dioxines furanes dans les fumées ce qui contribue à alléger la structure du système de traitement des fumées en aval de la chaudière de récupération.

Les cendres volantes récupérées sous le filtre ne sont pas contaminées par les dioxines furanes et sont peu chargées en métaux lourds. Elles sont donc assimilables à des mâchefers extraits en bas du foyer. La fraction résiduelle de cendres volantes passant à travers le filtre est recueillie dans le traitement des fumées ainsi que les métaux lourds après condensation ce qui permet une valorisation matière en métallurgie de ces métaux (Cd,Hg,Pb...).

Selon l'invention, on injecte en B, en entrée de l'élément filtrant 4, dans le flux des cendres volantes des fumées de combustion, un flux additionnel de particules solides B provenant d'un silo 5. Ces particules ont des caractéristiques contrôlées pour augmenter la température de fusion des fines particules de cendres volantes en formant avec celles-ci des eutectiques dont la température de fusion est de l'ordre de 650°C ou plus.

Ces particules solides peuvent avoir une granulométrie moyenne comprise entre 10 et 40 microns, une granulométrie relativement petite fournissant une surface de particules de réaction importante.

En variante, les particules du matériau de décolmatage peuvent être choisies afin également de modifier le spectre granulométrique du gâteau de filtration, et ainsi rendre le gâteau encore moins compact et encore plus facile à décolmater. Dans ce cas les particules solides ont de préférence une granulométrie supérieur à 40 microns très supérieure à celles des fines particules de cendres volantes (en moyenne inférieure à 40 microns).

La porosité peut être éventuellement étendue par un pré-traitement.

Avantageusement, le matériau de décolmatage est une composition à base d'alumine, par exemple une composition contrôlée en SiO₂,Al₂O₃,CaO,MgO pour former des eutectiques à hautes température avec principalement Na₂O et K₂O. De la bauxite peut être utilisée en tant que matériau de décolmatage.

L'élément filtrant 4 est par exemple un filtre à chandelles en céramique. Ce filtre est constitué d'une enceinte en métal 40 résistant à de hautes températures. Les fumées de combustion à dépoussiérer entrent dans l'enceinte par l'entrée 41. Les fumées dépoussiérées sortent de l'enceinte en 42 et le gâteau de filtration est récupéré par la sortie 43. Plusieurs chandelles en céramiques 44 sont représentées sur la figure à l'intérieur de l'enceinte 40.

Les fumées dépoussiérées sortant de l'élément filtrant 4 passent ensuite à travers la seconde partie 3b de la chaudière de récupération. Les fumées sortant de la partie 3b subissent des traitements en 6, par exemple de déchloruration, désulfuration, captation des métaux lourds en phase vapeur, captation de l'acide fluorhydrique, traitement des NOx.

Le gâteau de filtration est récupéré dans un silo 7 pour être traité successivement en 8 où on réalise une solubilisation et en 9 où on réalise une séparation par voie humide, à l'aide par exemple d'un hydrocyclone, pour séparer les particules solides de forte granulométrie constituant l'additif de décolmatage introduit en B vis-à-vis des cendres volantes.

Les particules solides indiquées par 10 de l'additif de décolmatage qui sont séparées dans le traitement 9, sont recyclées en C à l'entrée de l'élément filtrant 4 après un séchage éventuel. En variante, elles sont recyclées en D dans le foyer 1 et servent aussi à compléter la charge de celui-ci. Dans ce second cas, il est nécessaire de régler le séparateur 2 pour qu'il laisse passer les particules solides constituant l'additif de décolmatage de l'élément filtrant 4.

Les cendres volantes indiquées par 11 séparées dans le traitement 9, sont valorisées par un traitement humide 12 de séparation des cendres volantes fines CV vis-à-vis des sels S.

Dans le cas où les particules solides de l'additif de décolmatage sont recyclées en C à l'entrée de l'élément filtrant 4, il est avantageux de substituer un séparateur pneumatique à l'hydrocyclone dans le traitement 9 si en plus l'additif introduit en B est de nature catalytique (oxyde de vanadium, de fer ou analogue) pour abaisser les NOx.

Le procédé selon l'invention s'applique bien entendu à une unité de production d'énergie, notamment à combustion sous pression, à charbon ou analogue.

## Revendications

1. Un procédé pour dépoussiérer des fumées de combustion par passage de ces fumées à travers un élément filtrant à haute température (4) placé sur le trajet de circulation des fumées dans un chaudière de récupération (3) pour filtrer à chaud les cendres volantes contenues dans ces fumées, dans lequel on augmente la température de fusion des cendres volantes dans un but de décolmatage de l'élément filtrant en superposant au flux de cendres volantes un flux additionnel (B) d'un matériau de décolmatage ayant des caractéristiques telles qu'il forme avec les cendres volantes des eutectiques à haute température de fusion.

2. Le procédé selon la revendication 1, dans lequel le flux additionnel (B) d'un matériau de décolmatage a des caractéristiques telles qu'il modifie le spectre granulométrique du gâteau de filtration.

3. Le procédé selon la revendication 1, dans lequel le matériau de décolmatage se présente sous forme de particules solides ayant une granulométrie moyenne comprise entre 10 et 40 microns.

4. Le procédé selon la revendication 2, dans lequel le matériau de décolmatage se présente sous forme de particules solides ayant une granulométrie moyenne supérieure à 40 microns.

5. Le procédé selon la revendication 1, dans lequel le matériau de décolmatage est une composition à base de Al₂O₃.

6. Le procédé selon la revendication 1, dans lequel le matériau de décolmatage comporte un agent catalyseur en vue d'obtenir un abaissement des NOx dans les fumées.

7. Le procédé selon la revendication 1, dans lequel les cendres volantes sont filtrées à une température supérieure à 400°C.

8. Le procédé selon l'une des revendications précédentes dans lequel le gâteau de filtration constitué de cendres volantes contenues dans les fumées de combustion et du matériau de décolmatage est traité (8,9) pour recycler le matériau de décolmatage.

9. Le procédé selon la revendication 8, dans lequel le traitement du gâteau de filtration comprend une étape de solubilisation (8) du gâteau suivie d'une étape de séparation par voie humide (9) des cendres volantes vis-à-vis du matériau de décolmatage.

10. Le procédé selon la revendication 8, dans lequel le matériau de décolmatage recyclé est injecté dans le foyer de combustion (1) placé en amont de la chaudière de récupération (3).

11. Le procédé selon l'une des revendications précédentes appliqué à une unité d'incinération d'ordures ménagères comportant une chaudière de récupération en deux parties (3a,3b) entre lesquelles est placé l'élément filtrant (4).

12. Le procédé selon l'une des revendications 1 à 10 appliqué à une unité de production d'énergie, notamment à combustion sous pression.

## Patentansprüche

1. Ein Verfahren zur Entstaubung von Abgasen mittels Durchtritt dieser Abgase durch ein Hochtemperaturfilterelement (4), das in der Strombahn der Abgase in einem Abhitzekessel (3) angeordnet ist, um die in diesen Abgasen enthaltene Flugasche heiß zu filtrieren, bei welchem die Fusionstemperatur der Flugasche zum Zwecke der Filterreinigung des Filterelementes erhöht wird, indem dem Strom der Flugasche ein zusätzlicher Strom (B) eines Filterreinigungsmaterials überlagert wird, welches die Eigenschaft hat, daß es mit der Flugasche Eutektika mit hoher Fusionstemperatur bildet.

2. Das Verfahren nach Anspruch 1, bei welchem der zusätzliche Strom (B) eines Filterreinigungsmaterials die Eigenschaft hat, daß dieses die Korngrößenverteilung des Filterkuchens verändert.

3. Das Verfahren nach Anspruch 1, bei welchem das Filterreinigungsmaterial in der Form von festen Partikeln vorliegt, die einen Mittelwert der Korngrößenverteilung aufweisen, der zwischen 10 und 40 Mikrometer liegt.

4. Das Verfahren nach Anspruch 2, bei welchem das Filterreinigungsmaterial in der Form von festen Partikeln vorliegt, die einen Mittelwert der Korngrößenverteilung aufweisen, der oberhalb von 40 Mikrometern liegt.

5. Das Verfahren nach Anspruch 1, bei welchem das Filterreinigungsmaterial eine Zusammensetzung auf der Grundlage von Al₂O₃ ist.

6. Das Verfahren nach Anspruch 1, bei welchem das Filterreinigungsmaterial im Hinblick darauf eine Verringerung des NOx-Gehaltes in den Abgasen zu erhalten, einen Katalysator umfaßt.

7. Das Verfahren nach Anspruch 1, bei welchem die Flugasche bei einer Temperatur oberhalb von 400°C filtriert wird.

8. Das Verfahren nach einem der vorhergehenden Ansprüche, bei welchem der von der in den Abgasen enthaltenen Flugasche und dem Filterreinigungsmaterial gebildete Filterkuchen behandelt wird (8, 9), um das Filterreinigungsmaterial dem Kreislauf wieder zuzuführen.

9. Das Verfahren nach Anspruch 8, bei welchem die Behandlung des Filterkuchens einen Schritt zur Solubilisierung (8) des Kuchens, der von einem Schritt zur Abscheidung auf feuchten Weg (9) der Flugasche gegenüber dem Filterreinigungsmaterial gefolgt wird, umfaßt.

10. Das Verfahren nach Anspruch 8, bei welchem das wieder in den Kreislauf zurückgeführte Filterreinigungsmaterial in die stromaufwärts des Abhitzekessels (3) angeordnete Brennkammer (1) injiziert wird.

11. Das Verfahren nach einem der vorhergehenden Ansprüche, welches auf eine Müllverbrennungsanlage angewendet wird, die einen Abhitzekessel aus zwei Teilen (3a. 3b), zwischen denen das Filterelement (4) angeordnet ist, aufweist.

12. Das Verfahren nach einem der Ansprüche 1 bis 10, das auf eine Energieerzeugungsanlage, insbesondere mit Verbrennung unter Druck, angewendet wird.

## Claims

1. A method of scrubbing flue gases by causing the flue gases to pass through a high-temperature filter element (4) placed on the path along which the flue gases flow inside a recovery boiler (3), so that the fly ash contained in the flue gases can be filtered out while hot, and in which method the melting point of the fly ash is increased with a view to unclogging the filter elment by superposing an additional flow (B) of an unclogging material on the flow of fly ash, said material having characteristics such that it forms high melting point eutectics with the fly ash.

2. The method according to claim 1, in which the additional flow (B) of an unclogging material has characteristics such that it modifies the grain-size spectrum of the filter cake.

3. The method according to claim 1, in which the unclogging material is in the form of solid particles having a mean grain-size lying in the range 10 microns to 40 microns.

4. The method according to claim 2, in which the unclogging material is in the form of solid particles having a mean grain-size greater than 40 microns.

5. The method according to claim 1, in which the unclogging material is a composition based on Al₂O₃.

6. The method according to claim 1, in which the unclogging material contains a catalyst in order to obtain a reduction in the NOₓ content in the flue gases.

7. The method according to claim 1, in which the fly ash is filtered out at a temperature higher than 400°C.

8. The method according to any preceding claim, in which the filter cake constituted by fly ash contained in the flue gases and by the unclogging material (8, 9) is treated so as to recycle the unclogging material.

9. The method according to claim 8, in which the treatment of the filter cake includes a cake solubilization step (8) followed by a wet separation step (9) for separating the fly ash from the unclogging material.

10. The method according to claim 8, in which the recycled unclogging material is injected into the combustion hearth (1) placed upstream from the recovery boiler (3).

11. The method according to any preceding claim as applied to an incineration plant for household refuse, which plant includes a recovery boiler in two portions (3a, 3b), between which the filter element (4) is placed.

12. The method according to any one of claims 1 to 10, as applied to a power-generating plant, in particular a pressurized-combustion plant.
